# EUROPEAN PATENT APPLICATION

(11) **EP 2 639 902 A1**
(43) Date of publication of application: **18.09.2013**
(21) Application number: 12159090.5
(22) Date of filing: 12.03.2012
(51) Int. Cl.: H02B 1/36

(54) **Draw-out switching device**

(71) Applicant: Eaton Industries (Netherlands) B.V., 7559 SC Hengelo (NL)
(72) Inventor: Everink, Jacobus, 7623 CN Borne (NL); Hoekstra, Jaap, 7544 NE Enschede (NL); Geelen, Martin, 49828 Lage (DE)
(74) Representative: Tabeling, Marcella M.J.

(57) **Abstract**

The invention relates to a draw-out switching device comprising:
- a base frame for arrangement in a cabinet;
- a sub-frame slidable arranged in the base frame and housing switching gear; wherein the sub-frame is positionable in at least a connected position, a test position and a disconnected position; and
- a door for at least partially covering the sub-frame in the base frame, the door comprising a latch, which latch is blocked by the sub-frame in the test position and the connected position and the latch is released in the disconnected position.

## Description

The invention relates to a draw-out switching device comprising:
- a base frame for arrangement in a cabinet;
- a sub-frame slidable arranged in the base frame and housing switching gear; wherein the sub-frame is positionable in at least a connected position, a test position and a disconnected position.

Typical draw-out switches are used for low voltage applications such as switching pumps and electric motors. The draw-out switching devices are arranged in a cabinet which is provided with busbars to supply power and outgoing busbars to conduct switched power to for example a pump or motor.

The switching gear of the draw-out switching devices provide for the connecting and disconnecting of the supply busbars to the outgoing busbars. This switch gear comprises safety circuitry and actuators to make or brake contact between busbars.

For maintenance and problem solving, it is necessary that the switching gear can be tested. For this purpose, the switching gear has to be disconnected from the busbars. It is also desired that in such a test position the switching gear is connected to an auxiliary connector such that different components of the switching gear can be tested.

With a typical draw-out switch, the switch is partially pulled out of the cabinet such that the draw-out switch is disconnected from the busbars and the switching gear can be tested. In this test position the switching gear is connected to or still connected to an auxiliary connector for testing the switch gear.

The draw-out switch is pulled out further to truly disconnect the switching gear. In this position the draw-out switching device can be removed safely.

Known draw-out switching devices are manually operated to position them in the desired position. The position is often indicated by marks arranged on the base frame. It is however difficult to position the switching device accurately in the correct position.

Some known draw-out switching devices are provided with a positioning mechanism in which on has to use a ratchet to rotate a screw spindle, which moves the sub-frame with the switching gear. An indicator is arranged with the positioning mechanism for indicating in which position the draw-out switching device is moved. The use of a ratchet to rotate a screw spindle, takes a relative long time for moving the switching device to the desired position.

The known draw-out switching devices are arranged in a cabinet, which is sometimes provided with a door, to at least partially cover the draw-out switching devices. For safety, it is advised to have the door closed when positioning the switching devices to a desired position. This is however not mandatory with the know devices. It is even possible to remove a live draw-out switching device in one movement, which could cause serious damage to the electrical equipment.

Furthermore, dust and dirt could penetrate the switching devices, when the door is left open. The dust and dirt could cause malfunctioning of the switching devices.

It is an object of the invention to provide a draw-out switching device according to the preamble in which the above mentioned disadvantages are reduced or even removed.

This object is achieved according to the invention with a draw-out switching device, which is characterized by a door for at least partially covering the sub-frame in the base frame, the door comprising a latch. The latch enables one to close the door.

In a much preferred embodiment of the draw-out switching device according to the invention, the latch is blocked by the sub-frame in the test position and the connected position and the latch is released in the disconnected position.

According to the much preferred embodiment of the invention a door is provided, which can only be unlocked, when the sub-frame is in the disconnected position. If the sub-frame is in one of the other two positioned, the door cannot be opened. This increases the safety for the operator, as the operator can only access the slot with the draw-out switching device, when the switching device is disconnected, as otherwise the door would not open.

In a preferred embodiment of the draw-out switching device according to the invention, the sub-frame can only be positioned into the test position or connected position, with the door closed and the latch locked. This prevents the condition in which the door is left open and the draw-out switching device is moved to the test position. It ensures that the door is always closed and locked when the switching device is either in the test position or the connected position.

Preferably a secondary latch is arranged between the base frame and the sub-frame, wherein the secondary latch is operated by the latch of the door. The secondary latch is unlocked, when the latch of the door is in position and locked.

In another embodiment of the draw-out switching device according to the invention the door has an opening and the sub-frame comprises an extension part, which protrudes into the opening of the door.

Depending on the position of the sub-frame, the extension part will protrude more or less through the opening in the door. This provides for a visual indication, whether the draw-out switching device is in connected position or another position.

Preferably, the door comprises a gasket arranged along the edge of the opening for sealing the door onto the extension part.

In still another embodiment of the draw-out switching device according to the invention the door is hingedly arranged to the base frame.

The invention also relates to a combination of a cabinet and at least one of a draw-out switching device according to the invention, wherein the cabinet is provided with busbars arranged on the back wall and wherein the draw-out switching device is provided with feeder contacts and outgoing contacts for connection with the busbars.

The base frame is mounted in the cabinet and by moving the sub-frame, the feeder contacts and outgoing contacts of the draw-out switching device can be brought into contact with the busbars provided on the back of the cabinet.

These and other features of the invention will be elucidated in conjunction with the accompanying drawings.
Figure 1 shows a perspective view of an embodiment of a draw-out switching device according to the invention in a connected position.
Figure 2 shows a perspective view of the embodiment of figure 1 in disconnected position.
Figure 3 shows a perspective view of the embodiment of figure 1 in test position.
Figure 4 shows a detail of the secondary latch of the embodiment of figure 1.
Figure 5 shows the secondary latch in locked position.
Figure 6 shows the secondary latch in unlocked position.
Figure 7 shows a preferred embodiment of the secondary latch for the embodiment of figure 1.

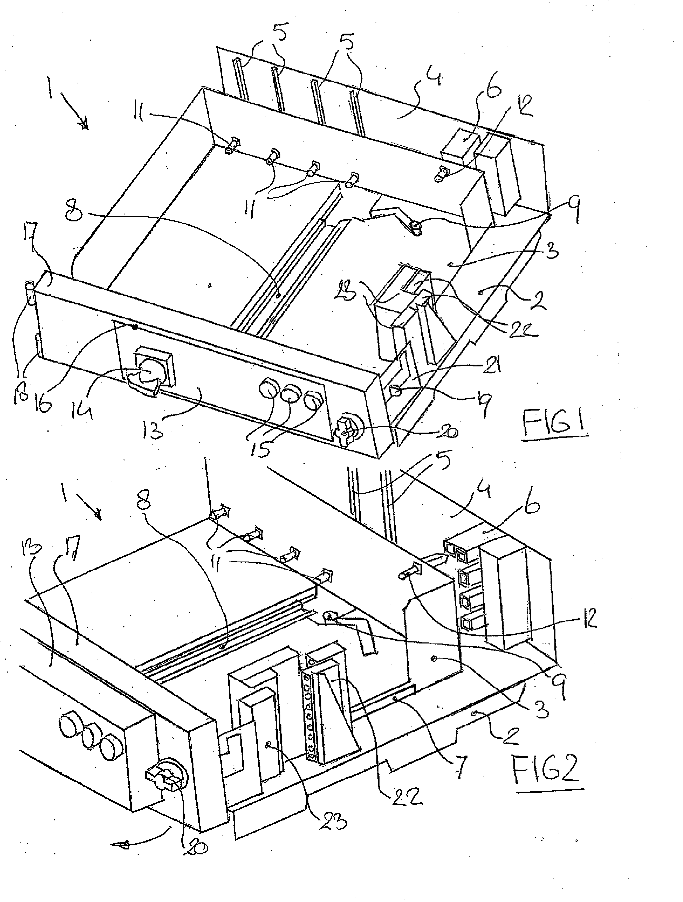

Figure 1 shows an embodiment of a draw-out switching device 1 according to the invention. The switching device 1 has a base frame 2 on which a sub-frame 3 is slidably arranged.

The base frame 2 is preferably arranged in a cabinet with a back wall 4. This back wall 4 has busbars 5 for supply of power and connection blocks 6 to which for example a pump or electric motor is connected.

The sub-frame 3 has a first sub-frame part 7 and the second sub-frame part 3. Both sub-frame parts 3 and 7 are guided along a guide rail 8, which is attached to the base frame 2. A cam 9 arranged on a lever (not shown) is used to control the movement of both sub-frame parts 3 and 7.

At the back of sub-frame 3, 7 a wall 10 is arranged with feeder contacts 11 and outgoing contacts 12. In the connected position as shown in figure 1, the feeder contacts 11 are in contact with the busbars 5, while the outgoing contact 12 is connected to the connection block 6. Switching gear (not shown) is connected to the feeder contacts 11 and the outgoing contacts 12 to switch power to the outgoing contact 12.

The front of the sub-frame 3, 7 has an extension part 13 with a switch 14 and control lights 15. This extension part 13 protrudes through an opening 16 in a door 17, which is arranged by hinges 18 to the base frame 2.

The door 17 has a latch 19 with an operating knob 20. The latch 19 interacts with a secondary latch 21, which will be explained further on.

An auxiliary connector 22, 23 is arranged with one part 22 to the base frame 2 and with the other part 23 to the sub-frame part 7.

Figure 2 shows the device 1 of figure 1 in disconnected position. The feeder contacts 11 are disconnected from the busbars 5 and the outgoing contact 12 is disconnected from the connection block 6. Also the auxiliary connector 22, 23 is apart.

This disconnected position is achieved by movement of the cam 9 as a result of which both sub-frame parts 3, 7 have been moved relative to the base frame 2. The extension part 13 now protrudes further through the door 17 and also only in this disconnected position, the latch 19, 20 can be unlocked such that the door 17 can be opened and the device can be fully removed.

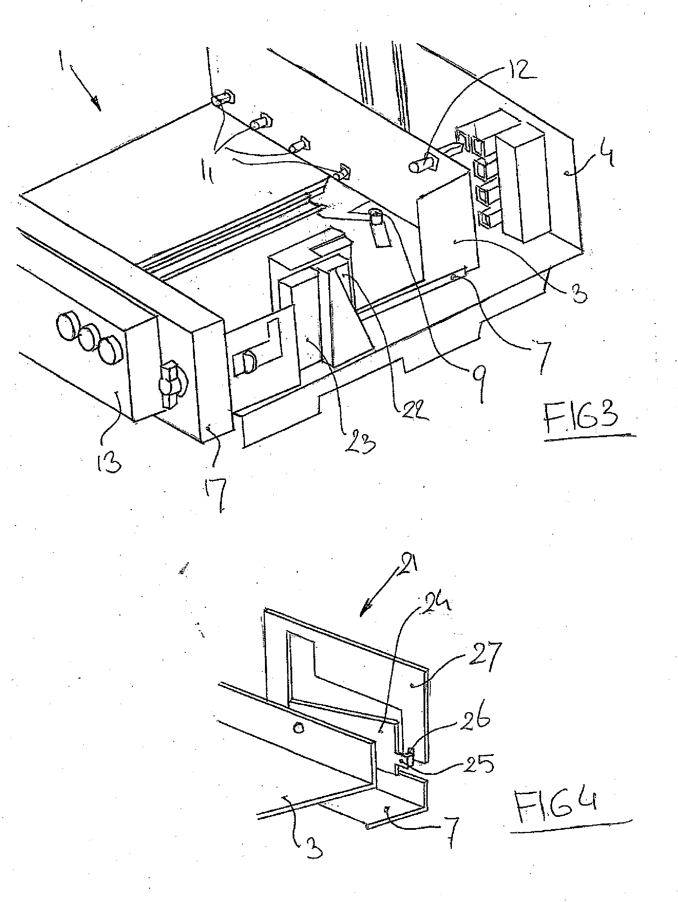

Figure 3 shows the device 1 in the test position. By movement of the cam 9 only the sub-frame part 7 has been moved to the back wall 4 of the cabinet. As the auxiliary contacts 23 are attached to the sub-frame part 7, these contacts 23 have been brought into contact with the auxiliary contacts 22, which are arranged on the base 2.

Note that the second sub-frame part 3 was not moved by the movement of the cam 9 (compared to the disconnected position as shown in figure 2). So, the feeder contacts 11 and outgoing contacts 12 are still disconnected. Also, the extension part 13 is still protruding through the door 17, indicating that the draw-out switching device 1 is not in the connected position.

Figure 4 shows the secondary latch 21 in detail, which cooperates with the latch 19, 20 of the door 17. The latch 21 has a plate 24 rotatable arranged to the second sub-frame part 3. The plate 24 has a lip 25 which locks into a groove 26 present in the upright portion 27 of the first sub-frame part 7. This interlocking of the lip 25 prevents relative movement of the first sub-frame part 7 and the second sub-frame part 3. When the cam 9 tries to move on of the sub-frame parts 3, 7 no movement can take place as both parts 3, 7 are interlocked.

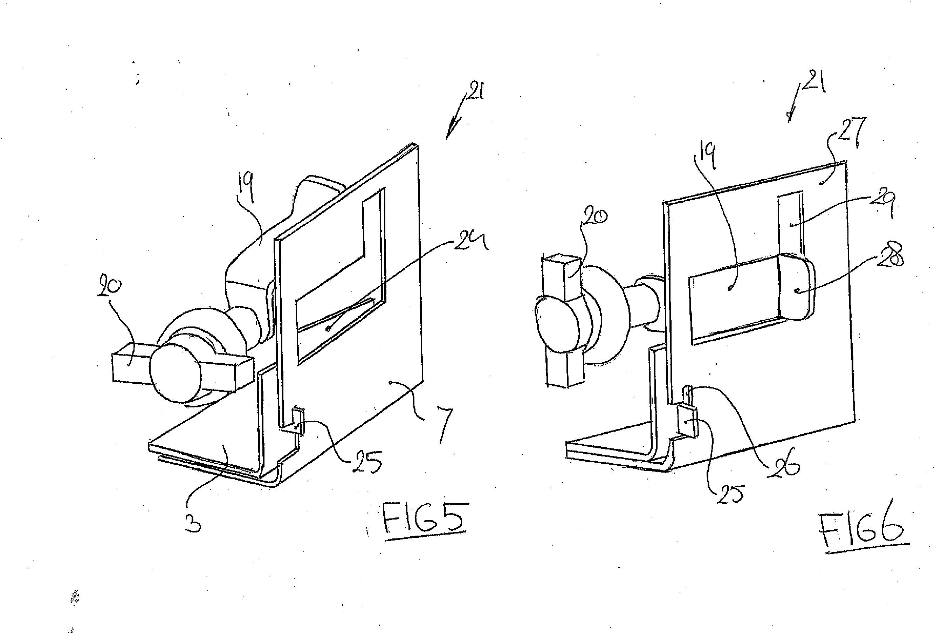

Figure 5 shows the secondary latch 21 from a different view point in conjunction with the door latch 19, 20. When the door latch 19, 20 is unlocked (as shown), the lip 25 of the plate 24 will prevent relative movement of the sub-frame parts 3, 7.

When the door latch 19, 20 is locked (as shown in figure 6), the lip 28 of the latch 19 will push the plate 24 down, such that the lip 25 is moved out of the groove 26. As a result, the sub-frame part 3 and sub-frame part 7 are no longer locked and the first sub-frame part 7 can be moved by the cam 9 to arrive at the test position of the draw-out switching device 1, as shown in figure 3.

So, it is clear that only in closed and locked position of the door 17, the secondary latch 21 is unlocked, such that the switching device 1 can be put in the test position and then the connected position. In these positions it is impossible to unlock the door 17 as the lip 28 is caught in the slot 29 in the upright portion 27 of the first sub-frame part 7 (see also figure 3).

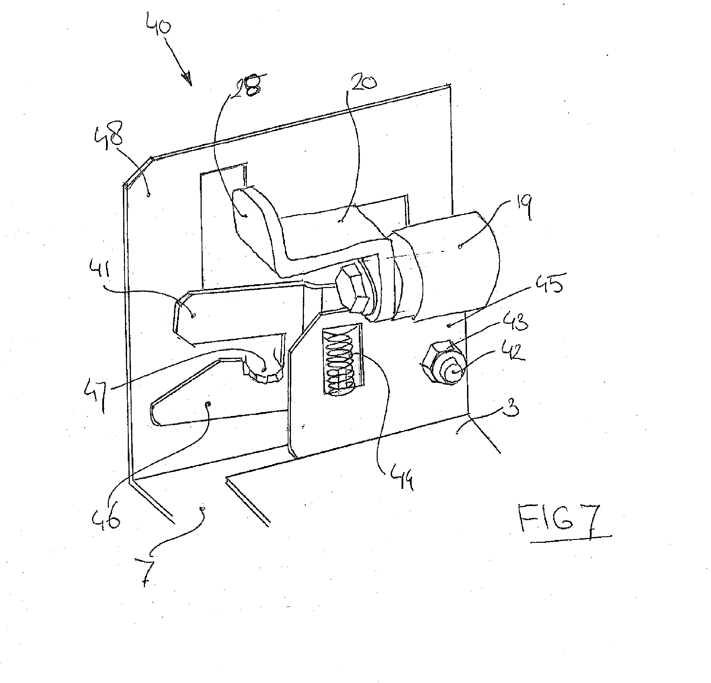

Figure 7 shows a preferred embodiment of the secondary latch 40 for the embodiment of figure 1. The secondary latch 40 cooperates with the latch 19, 20 of the door 17.

The latch 40 has a plate 41, which is rotatbele arranged to the second sub-frame part 3 around a bolt 42 and nut 43. A spring 44 is provided in the upright portion 45 to urge the plate 41 in the position shown.

The plate 41 is provided with a hook 46, which locks a protrusion 47 of the upright portion 48 of the first sub-frame part 7. This prevents relative movement of the first sub-frame part 7 and the second sub-frame part 3.

When the door 17 is locked, the latch 20 will turn, such that the lip 28 will push the plate 41 downwards and the lip 47 will be released by the hook 46. As a result, the first sub-frame part 7 may move to bring the draw-out switch 1 in the test position and then in the connected position.

## Claims

1. Draw-out switching device comprising:
- a base frame for arrangement in a cabinet;
- a sub-frame slidable arranged in the base frame and housing switching gear; wherein the sub-frame is positionable in at least a connected position, a test position and a disconnected position, **characterized by** - a door for at least partially covering the sub-frame in the base frame, the door comprising a latch.

2. Draw-out switching device according to claim 1, wherein the latch is blocked by the sub-frame in the test position and the connected position and the latch is released in the disconnected position.

3. Draw-out switching device according to claim 2, wherein the sub-frame can only be positioned into the test position or connected position, with the door closed and the latch locked.

4. Draw-out switching device according to any of the preceding claims, comprising a secondary latch arranged between the base frame and the sub-frame, wherein the secondary latch is operated by the latch of the door.

5. Draw-out switching device according to any of the preceding claims, wherein the door has an opening and the sub-frame comprises an extension part, which protrudes into the opening of the door.

6. Draw-out switching device according to claim 5, wherein the door comprises a gasket arranged along the edge of the opening for sealing the door onto the extension part.

7. Draw-out switching device according to any of the preceding claims, wherein the door is hingedly arranged to the base frame.

8. Combination of a cabinet and at least one of a draw-out switching device according to one of the preceding claims, wherein the cabinet is provided with busbars arranged on the back wall and wherein the draw-out switching device is provided with feeder contacts and outgoing contacts for connection with the busbars.
